# EUROPEAN PATENT APPLICATION

(11) **EP 4 840 378 A2**
(43) Date of publication of application: **18.11.2026**
(21) Application number: 26163299.6
(22) Date of filing: 01.04.2022
(51) Int. Cl.: A47J 43/046

(54) **BLENDER WITH TOUCHSCREEN INTERFACE**

(30) Priority: 08.04.2021 US 202117225746
(62) Document number(s) of the earlier application(s) in accordance with Art. 76 EPC: 22785201.9 / 4 319 609
(71) Applicant: MavorCo Operations LLC, New York, NY 10036 (US)
(72) Inventor: PAMPLIN, Ryan Michael, Benicia, California, 94510 (US)
(74) Representative: Berggren Oy

(57) **Abstract**

A blender with a round touchscreen interface is provided to control different blending modes of operation. Exemplary implementations may: receive, by the round touchscreen that is included in a control interface of the blender, a first type of user input; make detections regarding the user input received by the control interface of the blender; effectuate a transition from a ready-to-blend mode to a first blending mode, responsive to a first detection of a first type of detections; control an electrical motor during the ready-to-blend mode such that the blender is not blending; and control an electrical motor during the first blending mode such that the blender is blending.

## Description

### FIELD OF THE DISCLOSURE

The present disclosure relates to blenders with touchscreen interfaces, particularly portable blenders with round touchscreens.

### BACKGROUND

Blenders are known, typically as consumer-grade home appliances. Touchscreen user interfaces are known, *e.g*., for personal computing devices, game consoles, and cell phones.

### SUMMARY

One aspect of the present disclosure relates to a blender configured to blend foodstuffs using different (blending) modes of operation. A user may control transitions between different modes of operation through a touchscreen interface. In some implementations, the blender may be portable due to its size, and/or its rechargeability. By virtue of true portability, a user can take the blender anywhere and create drinks, shakes, smoothies, baby food, sauces, and/or other concoctions. Once the blender is fully charged, a user can prepare multiple servings quickly and easily. In some implementations, lack of an external power source, much less a reliable external power source, is no longer preventing users from enjoying blended drinks. By virtue of the control interface and corresponding control circuitry described in this disclosure, different blending modes of operation may be available through an easy-to-use control interface. In some implementations, the control interface may include a (round) touchscreen that is configured to receive user input.

The blender may include a blending component, a base assembly, a container assembly, a control interface, control circuitry, and/or other components. As used herein, the term "foodstuffs" may include ingredients ranging from solid to liquid, from hot to cold or frozen, in any combination. As used herein, the term "ingredient" merely connotates something fit to ingest, and not necessarily nutritional value. For example, ice and/or ice cubes may be ingredients.

As used herein, any association (or relation, or reflection, or indication, or correspondency) involving assemblies, blending components, blades, motors, rotational axes, longitudinal axes, diameters, batteries, couplings, interfaces, touchscreens, detectors, indicators, magnetic components, caps, rotations, and/or another entity or object that interacts with any part of the blender and/or plays a part in the operation of the blender, may be a one-to-one association, a one-to-many association, a many-to-one association, and/or a many-to-many association or "N"-to-"M" association (note that "N" and "M" may be different numbers greater than 1).

As used herein, the term "effectuate" (and derivatives thereof) may include active and/or passive causation of any effect. As used herein, the term "determine" (and derivatives thereof) may include measure, calculate, compute, estimate, approximate, generate, and/or otherwise derive, and/or any combination thereof.

These and other features, and characteristics of the present technology, as well as the methods of operation and functions of the related components of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

### BRIEF DESCRIPTION OF THE DRAWINGS

FIG. 1 shows a front view of a blender configured to blend foodstuffs using different (blending) modes of operation, in accordance with one or more implementations.
FIG. 2 shows a method for transitioning from a ready-to-blend mode to a first blending mode, in accordance with one or more implementations.
FIGs. 3A-3B-3C-3D-3E illustrate state transitions in exemplary state diagrams as may be used by a blender configured to blend foodstuffs using different (blending) modes of operation, in accordance with one or more implementations.
FIG. 4 shows an isometric elevated view of a blender configured to blend foodstuffs using different (blending) modes of operation, in accordance with one or more implementations.
FIG. 5 shows a front view of a base assembly of a blender configured to blend foodstuffs using different (blending) modes of operation, in accordance with one or more implementations.

### DETAILED DESCRIPTION

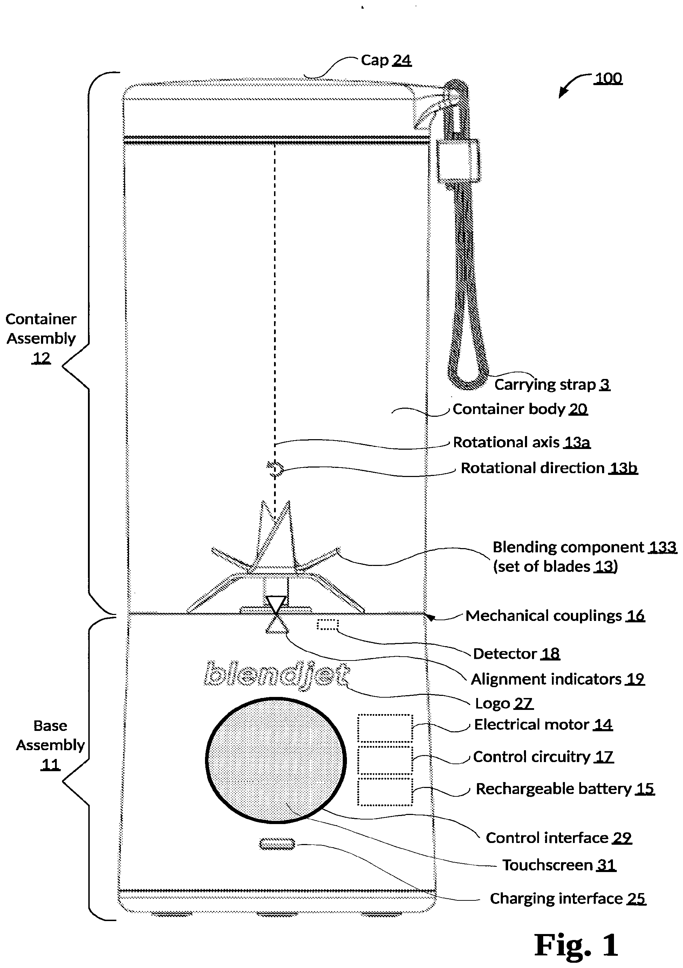

FIG. 1 shows a blender 100 configured to blend foodstuffs using different blending modes of operation, in accordance with one or more implementations. Blender 100 may include one or more of a base assembly 11, a container assembly 12, a blending component 133, a control interface 29, control circuitry 17 (depicted in FIG. 1 as a dotted rectangle to indicate this component may be embedded within base assembly 11, and not readily visible from the outside), and/or other components. Control interface 29 may include one or more of a touchscreen 31 and/or other components. Base assembly 11 and container assembly 12 may be configured to be coupled during blending by blender 100. For example, in some implementations, base assembly 11 and container assembly 12 may be mechanically coupled, *e.g*., through one or more threaded couplings. Other types of couplings may be envisioned for blender 100, though leak-proof options are preferred, since most uses include one or more liquid ingredients. In some implementations, control circuitry 17 and/or other components may be included in base assembly 11, *e.g.,* within base assembly 11. For example, one or more of control interface 29, control circuitry 17, electrical motor 14 (depicted in FIG. 1 as a dotted rectangle to indicate this component may be embedded within base assembly 11, and not readily visible from the outside), rechargeable battery 15 (depicted in FIG. 1 as a dotted rectangle to indicate this component may be embedded within base assembly 11, and not readily visible from the outside), and/or other components may be integrated permanently into base assembly 11 such that base assembly 11 forms an integral whole. In some implementations, the phrase *"integrated permanently"* may refer to components being integrated such that they are not readily accessible, serviceable, and/or replaceable by a user, or at least not during ordinary usage by the user, including, but not limited to, charging, blending, cleaning, and storing for later use.

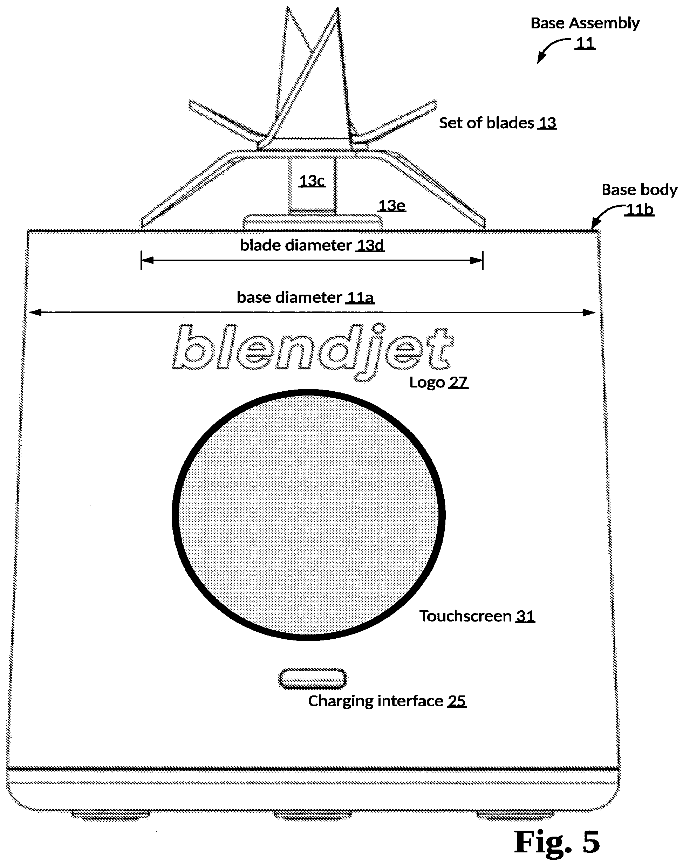

In some implementations, base assembly 11 may include one or more of a base body 11b (as depicted in FIG. 5, containing at least some of the components of base assembly 11), blending component 133 (*e.g.,* a set of blades 13, also referred to as a set of one or more blades 13), electrical motor 14, a rechargeable battery 15, a charging interface 25, one or more mechanical couplings 16, a detector 18 (depicted in FIG. 1 as a dotted rectangle to indicate this component may be embedded within base assembly 11, and not readily visible from the outside), one or more alignment indicators 19, control interface 29, and/or other components.

In some implementations, one or more mechanical couplings 16 may include threaded couplings. For example, one or more mechanical couplings 16 may include a first mechanical coupling and a second mechanical coupling. In some implementations, the first mechanical coupling may be included in base assembly 11, and may be a female threaded coupling configured to fit together with the second mechanical coupling (which may be included in container assembly 12). The first mechanical coupling and the second mechanical coupling may be configured to (temporarily and detachably) couple base assembly 11 to container assembly 12.

Referring to FIG. 1, blending component 133 may include one or more structural components configured to blend foodstuffs, including but not limited to one or more blending bars, one or more blades, and/or other structural components configured to rotate. For example, in some implementations, blending component 133 may include set of blades 13, which may be rotatably mounted to base assembly 11 to blend foodstuffs. Blending component 133 may be configured to rotate around a rotational axis 13a. Rotational axis 13a is depicted in FIG. 1 as a geometric 2-dimensional line extending indefinitely through blending component 133, and is not a physical axis. Rather, rotational axis 13a indicates how blending component 133 rotates in relation to other components of blender 100, in a rotational direction 13b. In some implementations, blending component 133 may be mounted permanently to base assembly 11. In some implementations, set of blades 13 may include 1, 2, 3, 4, 5, or more pairs of blades. In some implementations, a pair of blades may include two blades on opposite sides of rotational axis 13a. In some implementations, a pair of blades may have two blades such that the distal ends of these two blades are at the same horizontal level. In some implementations, as depicted in the upright configuration of blender 100 in FIG. 1, set of blades 13 may include six blades that form three pairs of blades. In some implementations, set of blades 13 may include at least two downward blades, which may prevent and/or reduce foodstuffs remaining unblended when disposed under the upward blades. In some implementations, set of blades 13 may include at least four upward blades. In some implementations, including six blades may be preferred over including less than six blades, in particular for blending ice and/or ice cubes. By using more blades, more points of contact will hit the ice at substantially the same time, which reduces the likelihood that a piece of ice is merely propelled rather than broken, crushed, and/or blended, in particular for implementations having limited power (here, the term *limited* is used in comparison to blenders that are connected to common outlets during blending), such as disclosed herein. As used herein, directional terms such as upward, downward, left, right, front, back, and so forth are relative to FIG. 1 unless otherwise noted.

Referring to FIG. 1, in some implementations, base assembly 11 may have a cylindrical and/or conical shape (apart from blending component 133 and/or set of blades 13). In some implementations, the shape of base assembly 11 may have a base diameter between 2 and 4 inches. In some implementations, the shape of base assembly 11 may have a base diameter between 3 and 3.5 inches. Such a base diameter may improve portability, as well as allow blender 100 to be stored in a cup holder, *e.g*., in a vehicle. For example, FIG. 5 shows a front view of base assembly 11, depicting a blade diameter 13d (*e.g*., the diameter of the circle described by rotation of the distal ends of the lowest (and/or widest) pair of blades in set of blades 13) and a base diameter 11a (as measured at or near the top of base assembly 11). In some implementations, blade diameter 13d may refer to the largest diameter of any circle described by rotation of distal ends of pairs of blades in set of blades 13 (or other distal ends of blending component 133), as measured perpendicular to rotation. In some implementations, the orientation of blade diameter 13d may be orthogonal/perpendicular to the direction of rotational axis 13a. In some implementations, the plane of rotation of the distal ends of the blades (or other distal ends of blending component 133) that define blade diameter 13d may be orthogonal/perpendicular to the direction of rotational axis 13a. Blade diameter 13d may refer to a blending bar, or to set of blades 13, and/or to other types of blending components.

Referring to FIG. 1, touchscreen 31 may be curved to match the cylindrical and/or conical shape of base assembly 11. In some implementations, touchscreen 31 may sit flush on base assembly 11. In some implementations, touchscreen 31 may include one or more of a lens, a glass top, an optical element, and/or other components. In some implementations, touchscreen 31 may be flat (*i.e.,* level) and include a curved (topical) lens. The lens may be curved to match the cylindrical and/or conical shape of base assembly 11. The lens may be positioned on top of touchscreen 31 and/or may give the appearance that touchscreen 31 is curved. In some implementations, touchscreen 31 may protrude out from base assembly 11, such that the edge of touchscreen 31 creates a lip with base assembly 11. In some implementations, the lip of touchscreen 31 may have a height of 1 millimeters, 2 millimeters, 3 millimeters, and/or other measurements. In some implementations, the lip may surround the circumference of touchscreen 31.

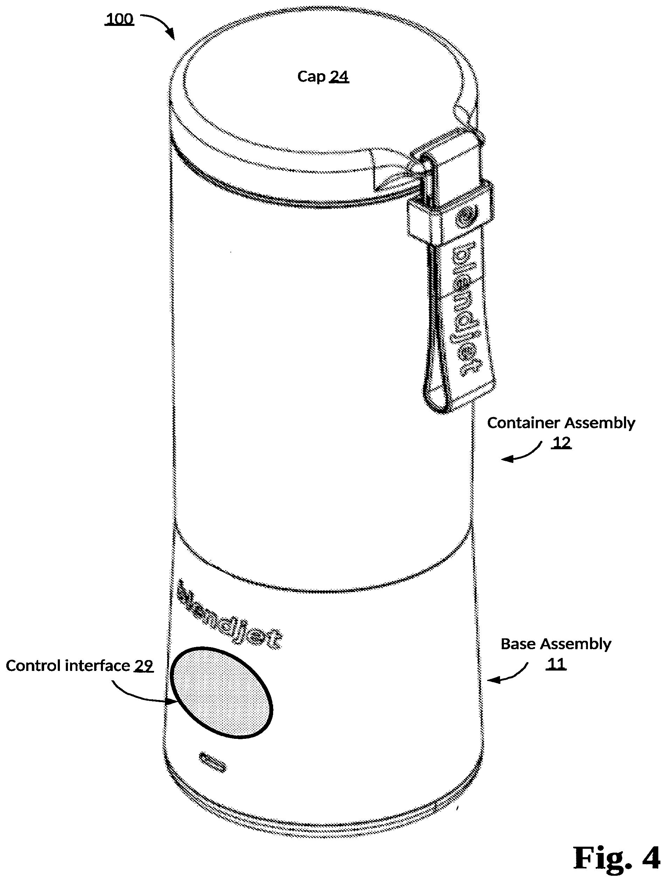

Referring to FIG. 1, container assembly 12 may include one or more of a container body 20, a cap 24 (*e.g.,* to prevent spilling during blending), a carrying strap 3 (*e.g*., configured to carry blender 100), and/or other components. Container body 20 may form a vessel to hold and/or contain foodstuffs within container assembly 12. In some implementations, container body 20 may be a cylindrical body and/or have a cylindrical shape, as depicted in FIG. 4. In some implementations, container body 20 may be open at one or both ends. In some implementations, container body 20 may be closed at the bottom. In some implementations, the dimensions of container assembly 12 may be such that the internal volume of container assembly 12 can hold 8, 10, 12, 14, 16, 18, 20, 22, 24, 28, 32, 36, 48, or more ounces. In some implementations, container assembly 12 and/or container body 20 may have cylindrical shapes.

Referring to FIG. 1, electrical motor 14 may be configured to rotationally drive blending component 133. In some implementations, electrical motor 14 may operate at a voltage between 5V and 15V. In one or more preferential implementations, electrical motor 14 may operate at a voltage of about 7.4V. In some implementations, electrical motor 14 may be configured to spin blending component 133 at a maximum speed between 15,000 rotations per minute (RPM) and 40,000 RPM. In one or more preferential implementations, electrical motor 14 may spin blending component 133 at a maximum speed of about 22,000 RPM. Electrical motor may be configured to be powered by rechargeable battery 15. Simultaneously, in some implementations, electrical motor 14 may be further configured to be powered through (standardized) charging interface 25, though that may not be the preferred way of operating blender 100. In one or more preferential implementations, no power is (or need be) supplied to electrical motor 14 from an external power source during blending by blender 100. In some implementations, control circuit 17 may be configured to control electrical motor 14 during rotation of blending component 133. For example, control circuit 17 may control the speed of the rotation of blending component 133 during blending by blender 100.

Referring to FIG. 1, rechargeable battery 15 may be configured to power electrical motor 14. In some implementations, rechargeable battery 15 may be configured to power electrical motor 14 such that, during blending by blender 100, no power is supplied to electrical motor 14 from an external power source. In some implementations, rechargeable battery 15 may be non-removable. As used herein, the term "non-removable" may mean not accessible to users during common usage of blender 100, including charging, blending, cleaning, and storing for later use. In some implementations, rechargeable battery 15 may be not user-replaceable (in other words, non-removable). In some implementations, rechargeable battery 15 may be user-replaceable. In some implementations, rechargeable battery 15 may be store-bought. In some implementations, rechargeable battery 15 may have a capacity between 1000 mAh and 10000 mAh. In one or more preferential implementations, rechargeable battery 15 may have a capacity of about 2500 mAh. In some implementations, control circuit 17 may be configured to control charging of rechargeable battery 15. For example, control circuit 17 may control the transfer of electrical power through standardized charging interface 25 into rechargeable battery 15. For example, responsive to a detection that rechargeable battery 15 is fully charged, control circuit 17 may prevent the transfer of electrical power through standardized charging interface 25 into rechargeable battery 15.

Charging interface 25 may be standardized and may be configured to conduct electrical power to rechargeable battery 15. In some implementations, charging interface 25 may be configured to conduct electrical power to charge rechargeable battery 15, *e.g.,* from an external power source. In some implementations, charging interface 25 may be configured to support wireless charging of rechargeable battery 15, *e.g*., from an external power source, including but not limited to induction-based charging. In some implementations, charging interface 25 may be a universal serial bus (USB) port configured to receive an electrical connector for charging rechargeable battery 15. A USB port is merely one type of standardized charging interface. Other standards are contemplated within the scope of this disclosure. The electrical connector may be connected to an external power source. In some implementations, charging interface 25 may be covered for protection and/or other reasons.

Detector 18 may be configured to detect whether mechanical couplings 16 are coupled in a manner operable and suitable for blending by blender 100. In some implementations, operation of detector 18 may use one or more magnetic components. For example, in some implementations, one or more magnetic components are included in container body 20. Engagement may be detected responsive to these one or more magnetic components being aligned and sufficiently close to one or more matching magnetic components that may be included in base assembly 11. In some implementations, blender 100 may include one or more alignment indicators 19, depicted in FIG. 1 as matching triangles, to visually aid the user in aligning base assembly 11 with container assembly 12 in a manner operable and suitable for blending. In some implementations, one or more alignment indicators 19 may be in the front, in the back, and/or in other parts of blender 100.

Control interface 29 is (part of) the user interface of blender 100. Through this user interface, a user of blender 100 may control the operation of blender 100, including but not limited to transitions between different modes of operation. For example, the different modes of operation may include multiple blending modes of operation. For example, in some implementations, the modes of operation include a ready-to-blend mode. During the ready-to-blend mode, blender 100 is not blending, but blender 100 may be ready to blend (*i.e.,* ready to initiate blending). For example, blender 100 may have sufficient power through rechargeable battery 15, and mechanical couplings 16 may be coupled in a manner operable and suitable for blending by blender 100. The transitions may include transitions from the ready-to-blend mode to one of the blending modes of operation, and/or *vice versa.*

In some implementations, the blending modes of operation of blender 100 may include at least two blending modes of operation: a fixed-time blending mode of operation, a variable-time blending mode of operation, and/or other blending modes of operation. For example, during the fixed-time blending mode of operation of blender 100, control circuitry 17 may be configured to effectuate rotation of blending component 133 (in other words, to effectuate blending) for a particular duration. In some implementations, the particular duration may be limited to a predetermined time limit. For example, the predetermined time limit may be 10 seconds, 20 seconds, 30 seconds, 40 seconds, 50 seconds, 1 minute, and/or other time limit. In some implementations, the predetermined time limit may be between 10 and 60 seconds, between 20 and 50 seconds, between 30 and 40 seconds, between 1 and 2 minutes, and/or have another range of durations. For example, during the variable-time blending mode of operation of blender 100, control circuitry 17 may be configured to effectuate rotation of blending component 133 for one or more durations. Individual ones of the one or more durations may correspond to individual occurrences of the user touching touchscreen 31. In other words, as long as the user continues to touch touchscreen 31, blender 100 blends. For example, the user may use short taps or longer taps, or any combination as desired during the variable time blending mode of operation of blender 100.

In some implementations, control interface 29 may include one or more touchscreens, such as touchscreen 31. For example, a touchscreen of control interface 29 may be configured to receive user input. As used herein, user input of a touchscreen may include one or more of tapping touchscreen 31, multiple consecutive occurrences of tapping on touchscreen 31, swiping touchscreen 31 (*e.g*., horizontally, vertically, and/or diagonally), and/or other user gestures (by way of non-limiting example, a circular swipe or gesture) or user interactions with touchscreen 31. In some implementations, control interface 29 includes exactly one touchscreen (*i.e.,* touchscreen 31). For example, in some implementations, touchscreen 31 may be the only user-manipulatable portion of control interface 29, such that no other user interface component controls the operation of blender 100 or the transitions between different blending modes of operation used by blender 100.

In some implementations, control interface 29 may include one or more controllable light-emitting components. For example, the light-emitting components may be LEDs or other types of lights. In some implementations, the light emitting components may be positioned around the circumference of touchscreen 31. In some implementations the light emitting component may be (part of) touchscreen 31 itself. For example, touchscreen 31 may flash to indicate a transition from one (blending) mode to another (blending) mode. In some implementations, the one or more controllable light-emitting components may be configured to selectively light up. In some implementations, the one or more controllable light-emitting components may be configured to indicate, to a user, a current mode of operation of blender 100, an occurrence of a transition between different modes of operation, a warning for the user, and/or other information regarding the operation of blender 100. For example, the one or more controllable light-emitting components may use different colors, intensities, patterns, sequences, and/or other combinations of light to provide information to the user. In some implementations, control interface 29 may include one or more controllable sound-emitting components, such as a speaker, configured to selectively emit sound. In some implementations, the one or more controllable sound-emitting components may be configured to indicate, to a user, a current mode of operation of blender 100, an occurrence of a transition between different modes of operation, a warning for the user, and/or other information regarding the operation of blender 100. For example, the one or more controllable sound-emitting components may use different frequencies, volumes, patterns, sequences, and/or other combinations of sound to provide information to the user.

In some implementations, base assembly 11 may include a haptic feedback engine (not depicted). The haptic feedback engine may be configured to provide haptic feedback to the user. Haptic feedback to the user may be controlled by control circuitry 17. In some implementations, a detection of user input by control circuitry 17 may initiate one or more haptic feedback responses by the haptic feedback engine. A haptic feedback response may include one or more vibrations of touchscreen 31. In some implementations, the haptic feedback response may be determined by the type of detections made by control circuitry 17. By way of non-limiting example, a first type of detections may initiate a first type of haptic feedback response, and a second type of detections may initiate a second type of haptic feedback response, and/or other haptic feedback responses. The first type of haptic feedback response may be different than the second type of haptic feedback response and/or other haptic feedback responses. In some implementations, haptic feedback response may vary in vibration strength, pattern, and/or other (vibration) aspects. In some implementations, the haptic feedback response may include touchscreen 31 moving inward, similar to a button, upon receiving user input. In some implementations, the haptic feedback responses may be used to convey blender information to the user. For example, a haptic feedback response may indicate to the user that blender 100 is in a low-battery mode and/or in a locked mode.

Touchscreen 31 may include on or more of an electronic ink design. In some implementations, the electronic ink design may be embedded into touchscreen 31. In some implementations, the electronic ink design may include one or more of a logo, an icon, and/or other designs. In some implementations, the electronic ink design may only be visible to the user when touchscreen 31 is not illuminated and/or turned off. In some implementations, the electronic ink design may be visible to the user when blender 100 is in one or more of a low-power mode, a locked mode, a ready-to-blend mode, a shutdown mode, and/or other modes.

Control circuitry 17 may be configured to control different functions and/or operations of blender 100, including but not limited to turning blender 100 on and off, transitioning between different modes of operation, charging of rechargeable battery 15, controlling of electrical motor 14 with regard to rotation of blending component 133 and/or during rotation of blending component 133, determining whether mechanical couplings 16 are engaged properly for blending, controlling or otherwise using control interface 29, and/or performing other functions for blender 100. In some implementations, control circuitry 17 may be configured to prevent rotation of blending component 133 responsive to a determination that mechanical couplings 16 are not engaged (or not engaged properly for the intended operation of blender 100). In some implementations, control circuitry 17 may be configured to use control interface 29 to convey information regarding the operational status of blender 100 to a user. For example, control interface 29 may include a light that can illuminate in various colors and/or patterns. In some implementations, control circuitry 17 may be implemented as a printed circuit board (PCB).

In some implementations, control circuitry 17 may be configured to make detections regarding one or more touchscreens of control interface 29. For example, control circuitry 17 may be able to detect whether touchscreen 31 has received (one or more types of) user input. User input may include one or more of the user single tapping, double tapping, swiping (horizontally from left to right, horizontally from right to left, vertically from top to bottom, vertically from bottom to top, and/or other types of swiping), tapping and holding, and/or other interactions or types of user input received through touchscreen 31. Control circuitry 17 may be configured to make different types of detections based on user input, including but not limited to first, second, and third types of detections. A first type of detections may indicate occurrences of the user touching touchscreen 31 in a first manner. A second type of detection may indicate occurrences of the user touching touchscreen 31 in a second manner that differs from the first manner. A third type of detection may indicate occurrences of the user touching touchscreen 31 in a third manner that differs from the first manner and the second manner, and so forth. In some implementations, touchscreen 31 may include one or more selection regions. Selection regions may include visible and invisible boundaries that divide the area of touchscreen 31 into separate selection regions. For example, touchscreen 31 may include one of more of 2 regions, 3 regions, 4 regions, 6 regions, and/or other numbers of regions. By way of non-limiting example, touchscreen 31 may be divided into 2 selection regions. In some implementations, the 2 regions may include the top half of touchscreen 31 and the bottom half of touchscreen 31. In some implementations, the 2 regions may include the left half of touchscreen 31 and the right half of touchscreen 31. In some implementations, the user touching the top half region may indicate occurrences of a particular type of detections and the user touching the bottom half region may indicate occurrences of a different particular type of detections. In some implementations, the user touching the left half region may indicate occurrences of a given type of detections and the user touching the right half region may indicate occurrences of a different type of detections. In some implementations, swiping left-to-right may be a different type of detection than swiping right-to-left. In some implementations, swiping top-to-bottom may be a different type of detection than swiping bottom-to-top.

In some implementations, control circuitry 17 may be configured to control operations of control interface 29 to enable one of more transitions between different (blending) modes of operation. The transition may include a first, second, third, fourth, fifth transition and so forth. For example, the first transition may be from a ready-to-blend mode to a first blending mode. In some implementations, a transition to the first blending mode may occur responsive to a first occurrence of the first type of detections. The first blending mode may be one of a fixed-time blending mode, a variable time blending mode, and/or other blending modes. For example, the second transition may be from a first blending mode to a ready-to-blend mode. In some implementations, the second transition may occur responsive to a second occurrence of the first type of detection and/or other particular types of detections. Other particular types of detections may include one or more idle durations in which touchscreen 31 does not receive user input for a set duration of time. By way of non-limiting example, the first blending mode may have a fixed time duration, after which the blender may automatically "time-out" and transition to the ready-to-blend mode without user input. For example, the third transition may be from a first blending mode to a second blending mode. The second blending mode may be a different blending mode of operation than the first blending mode. In some implementations, the third transition may occur responsive to a third occurrence of the first type of detections. In some implementations, control circuitry 17 may be configured to prevent rotation of blending component 133 in a locked mode of operation. In some implementations, control circuitry 17 may be configured to allow rotation of blending component 133 in an unlocked mode of operation (by way of non-limiting example, the ready-to-blend mode may be an unlocked mode of operation).

In some implementations, control circuitry 17 may be configured to control operations of control interface 29 to enable one or more transitions between displays presented via touchscreen 31 (*e.g*., different sets of information and/or different options for accepting user input). Displays may include one or more of a home menu, a settings menu, a selection menu, a recipe menu, and/or other menus and/or presentations. The transitions may include a fourth, fifth, sixth, seventh, eighth transition and/or other transitions. For example, the fourth transition may be a transition from a first display to a second display, presented to the user via touchscreen 31. The first display may be one or more of a home menu and/or other displays. The second display may be one or more of a selection menu, a settings menu, a recipe menu, and/or other menus and/or presentations. The second display may be different than the first display. In some implementations, the fourth transition may occur responsive to a particular occurrence of a particular type of detections. For example, the fifth transition may be a transition from the second display to the first display, presented to the user via touchscreen 31. In some implementations, the fifth transition may occur responsive to a particular occurrence of a particular type of detections. For example, a sixth transition may be a transition from the second display to a third display, presented via touchscreen 31. The third display may include one or more of a selection menu, a settings menu, a recipe menu, and/or other menus and/or displays. The third display may be different than the second display and the first display. In some implementations, the sixth transition may occur responsive to a particular occurrence of a particular type of detections.

In some implementations, the second type of detections may include the user swiping touchscreen 31. By way of non-limiting example, the user may swipe in a motion to the right to transition to the second display. For example, the user may swipe to the left to transition from the second display back to the first display. In some implementations, the second type of detections may include the user touching one or more items of a list of one or more items displayed on touchscreen 31. For example, each of the items of the list of items may correspond to one or more different displays touchscreen 31 may present to the user. In some implementations, the user may transition from the current display to the previous display by clicking one of an "X"-button, a back arrow, and/or other icon buttons presented.

In some implementations, control circuitry 17 may be configured to control operations of control interface 29 to enable the user to make modifications to one or more aspects of one or more blending modes of operation. Aspects of one of more blending modes of operations may include one of more of (default) time duration, blending strength, blending speed, number of rotations of the blending component, blending direction, and/or other features of the blending mode. In some implementations, modifications to one or more aspects of one of more blending modes of operation may occur responsive to an occurrence of the third type of detections. By way of non-limiting example, modifications may occur after a transition from a first display to a settings menu display. In some implementations, the transition from the first display to the settings menu display may occur responsive to an occurrence of the second type of detections. Modifications may occur responsive to an occurrence of the third type of detections. In some implementations, the third type of detections may include single tapping, double tapping, swiping, tapping and holding, and/or other interactions with touchscreen 31. In some implementations, the settings menu may appear on touchscreen 31 as a dial. The dial may include one or more indicators and/or one or more time durations corresponding to one or more blending modes of operation. The user may mimic spinning and/or otherwise rotating the displayed dial as a form or type of user input. The user may swipe touchscreen 31 to initiate an occurrence of the third type of detections. The occurrence of certain types of detections may cause the dial to turn and the indicator to indicate a different time duration than the initial time duration, and, subsequently, may set the new time duration to the pertinent blending mode of operation.

In some implementations, control by a user of blender 100 may be based on a switch (not shown), a button (not shown), voice-controlled operation (not shown), touch-free gesture-based operation (not shown), and/or other types of user interfaces suitable to control or turn consumer appliances on and off. Control interface 29 (*e.g.*, through one or more light-emitting components) may be configured to illuminate in various colors (red, blue, purple, *etc.*) and/or patterns (solid, fast blinking, slow blinking, alternating red and blue, etc.). Control interface 29 may convey information regarding the operational status of blender 100 to a user. The operational status of blender 100 may be determined by control circuitry 17. Control interface 29 may be controlled by control circuitry 17. For example, if control interface 29 is solid purple, blender 100 may be charging and/or insufficiently charged to blend. For example, if control interface 29 is solid blue, blender 100 may be ready for blending (*e.g*., in the ready-to-blend mode). For example, if control interface 29 is alternating red and blue, blender 100 may not be ready for blending due to base assembly 11 and container assembly 12 not being coupled properly and/or fully. For example, in some implementations, threaded couplings between assembly 11 and container assembly 12 may need to be tightened sufficiently for proper blending, and control interface 29 may warn the user if needed.

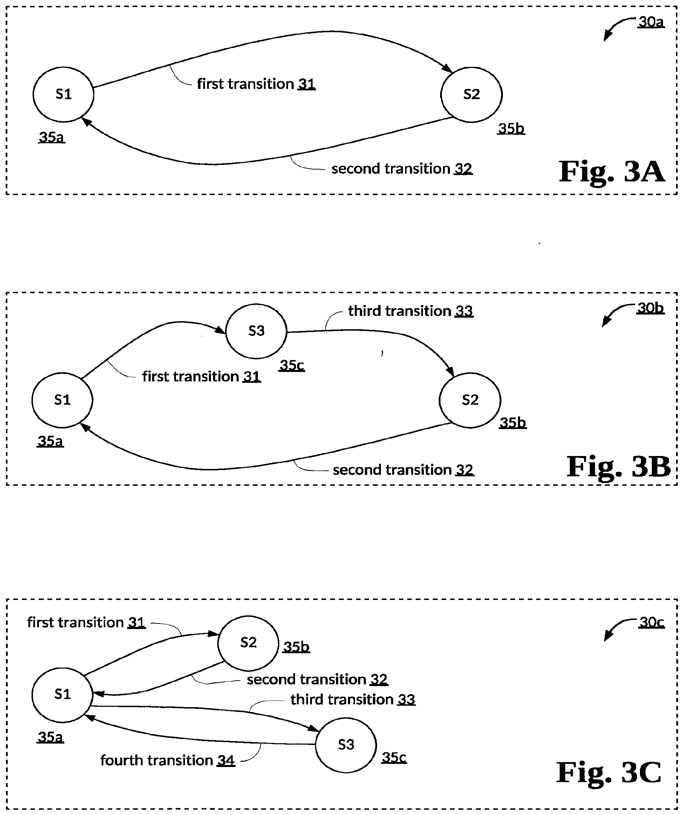

By way of non-limiting example, FIG. 3A illustrates state transitions in a state diagram 30a as may be used by blender 100, *e.g.,* responsive to different types of detections regarding control interface 29 being manipulated by a user as described elsewhere in this disclosure. As depicted, state diagram 30a may include a first state 35a (labeled "S1") and a second state 35b (labeled "S2"). First state 35a may correspond to a ready-to-blend mode of blender 100. Second state 35b may correspond to a first blending mode of operation of blender 100. As depicted here, a first transition 31 may transition the mode of operation of blender 100 from first state 35a to second state 35b. A second transition 32 may transition the mode of operation of blender 100 from second state 35b to first state 35a. First transition 31 may occur responsive to detection of the first type of detections. Second transition 32 may occur automatically, *e.g*., after completion of a first blending operation.

By way of non-limiting example, FIG. 3B illustrates state transitions in a state diagram 30b as may be used by blender 100, *e.g*., responsive to different types of detections regarding control interface 29 being manipulated by a user as described elsewhere in this disclosure. As depicted, state diagram 30b may include a first state 35a (labeled "S1"), a second state 35b (labeled "S2"), and a third state 35c (labeled "S3"). First state 35a may be similar as described regarding FIG. 3A. Second state 35b may correspond to a first blending mode of operation of blender 100. Third state 35c may correspond to a second and/or intermediate mode of operation of blender 100. As depicted in state diagram 30b, a first transition 31 may transition the mode of operation of blender 100 from first state 35a to third state 35c. A second transition 32 may transition the mode of operation of blender 100 from second state 35b to first state 35a. A third transition 33 may transition the mode of operation of blender 100 from third state 35c to second state 35b. First transition 31 may occur responsive to detection of the first type of detections. Third transition 33 may occur responsive to completion of operations during third state 35c. Second transition 32 may occur automatically.

By way of non-limiting example, FIG. 3C illustrates state transitions in a state diagram 30c as may be used by blender 100, *e.g*., responsive to different types of detections regarding control interface 29 being manipulated by a user as described elsewhere in this disclosure. As depicted, state diagram 30b may include a first state 35a (labeled "S1"), a second state 35b (labeled "S2"), and a third state 35c (labeled "S3"). First state 35a may be similar as described regarding FIG. 3B. Second state 35b may correspond to a first blending mode of operation of blender 100. Third state 35c may correspond to a second blending mode of operation of blender 100. As depicted in state diagram 30b, a first transition 31 may transition the mode of operation of blender 100 from first state 35a to second state 35b. A second transition 32 may transition the mode of operation of blender 100 from second state 35b back to first state 35a. A third transition 33 may transition the mode of operation of blender 100 from first state 35a to third state 35c. A fourth transition 34 may transition the mode of operation of blender 100 from third state 35c back to first state 35a. First transition 31 may occur responsive to a first detection of the first type of detections. Second transition 32 may occur responsive to a second detection of the first type of detections (or automatically). Third transition 33 may occur responsive to a third detection of a particular type (e.g., the first type) of detections. Fourth transition 34 may occur responsive to a fourth detection of a particular type (e.g., the first type) of detections, or automatically.

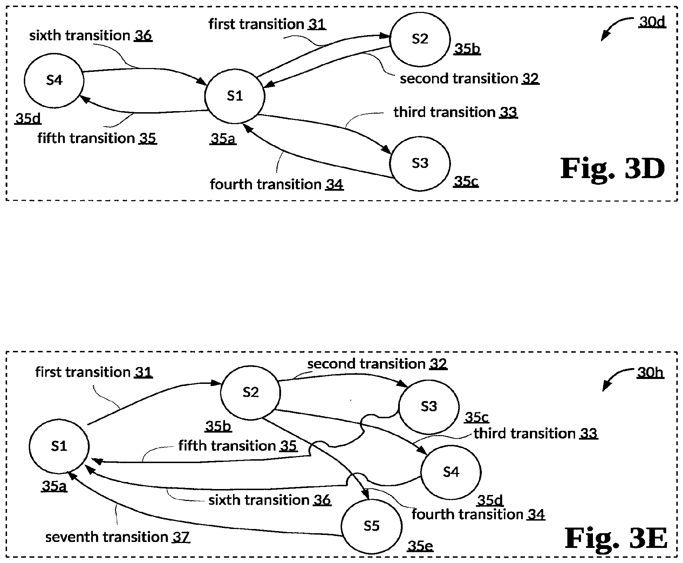

By way of non-limiting example, FIG 3D illustrates state transitions in a state diagram 30d as may be user by blender 100, *e.g*., responsive to different types of detections regarding control interface 29 being manipulated by a user as described elsewhere in this disclosure. As depicted, state diagram 30b may include a first state 35a (labeled "S1"), a second state 35b (labeled "S2"), a third state 35c (labeled "S3"), and a fourth state 35d (labeled "S4"). First state 35a may correspond to a first display being presented via touchscreen 31. Second state 35b may correspond to a second display being presented via touchscreen 31. Third state 35c may correspond to a third display being presented via touchscreen 31. Fourth state 35d may correspond to a fourth display being presented via touchscreen 31. The first display, the second display, the third display, and the fourth display may all be different. As depicted in state diagram 30d, a first transition 31 may transition the presented display from the first display to the second display. The first transition may occur responsive to a first occurrence of the second type of detections. A second transition 32 may transition the presented display from the second display to the first display. The second transition may occur responsive to a second occurrence of the second type of detections. A third transition 33 may transition the presented display from the first display to the third display. The third transition may occur responsive to a third occurrence of the second type of detections. A fourth transition 34 may transition the presented display from the third display to the first display. The fourth transition may occur responsive to a fourth occurrence of the second type of detections. A fifth transition 35 may transition the presented display from the first display to the fourth display. The fifth transition may occur responsive to a fifth occurrence of the second type of detections. A sixth transition 36 may transition the presented display from the fourth display to the first display. The sixth transition may occur responsive to a sixth occurrence of the second type of detections. In some implementations, the first display may be a home menu and/or may include a list of menus and/or displays the user may navigate to.

By way of non-limiting example, FIG 3E illustrates state transitions in a state diagram 30d as may be user by blender 100, *e.g*., responsive to different types of detections regarding control interface 29 being manipulated by a user as described elsewhere in this disclosure. As depicted, state diagram 30b may include a first state 35a (labeled "S1"), a second state 35b (labeled "S2"), a third state 35c (labeled "S3"), a fourth state 35d (labeled "S4"), and a fifth state 35e (labeled "S5"). First state 35a, second state 35b, third state 35c, and fourth state 35d may be similar as described regarding FIG. 3D. Fifth state may correspond to a fifth display being presented via touchscreen 31. The fifth display may be different than the first, second, third, and fourth displays. As depicted in state diagram 30e, a first transition 31 may transition the presented display from the first display to the second display. The first transition may occur responsive to a first occurrence of the second type of detections. A second transition 32 may transition the presented display from the second display to the third display. The second transition may occur responsive to a second occurrence of the second type of detections. A third transition 33 may transition the presented display from the second display to the fourth display. The third transition may occur responsive to a third occurrence of the second type of detections. A fourth transition 34 may transition the presented display from the second display to the fifth display. The fourth transition may occur responsive to a fourth occurrence of the second type of detections. A fifth transition 35 may transition the presented display from the first display to the fourth display. The fifth transition may occur responsive to a fifth occurrence of the second type of detections. A sixth transition 36 may transition the presented display from the fourth display to the first display. The sixth transition may occur responsive to a sixth occurrence of the second type of detections. A seventh transition 37 may transition the presented display from the fifth display to the first display. The seventh transition may occur responsive to a sixth occurrence of the second type of detections. In some implementations, the third state, the fourth state, and the fifth state may be grouped together as a collection of states. Each of the individual states in the collection of states may be presented to the user in a menu display as the second display of the second state.

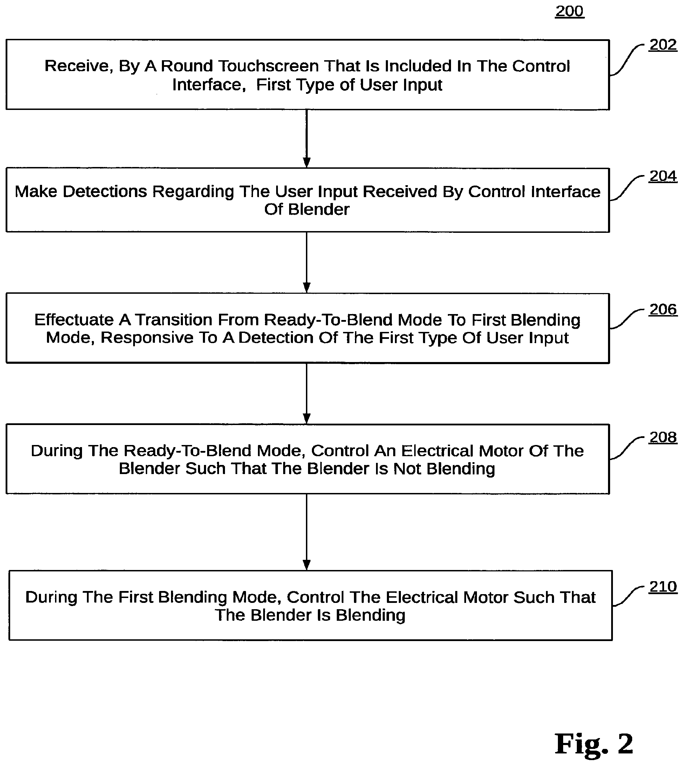

FIG. 2 illustrates a method 200 for transitioning between a ready-to-blend mode and a first blending mode, in accordance with one or more implementations. The operations of method 200 presented below are intended to be illustrative. In some implementations, method 200 may be accomplished with one or more additional operations not described, and/or without one or more of the operations discussed. Additionally, the order in which the operations of method 200 are illustrated in FIG. 2 and described below is not intended to be limiting.

In some implementations, method 200 may be implemented using one or more processing devices (*e.g*., a digital processor, an analog processor, a digital circuit designed to process information, an analog circuit designed to process information, a state machine, and/or other mechanisms for electronically processing information). The one or more processing devices may include one or more devices executing some or all of the operations of method 200 in response to instructions stored electronically on an electronic storage medium. The one or more processing devices may include one or more devices configured through hardware, firmware, and/or software to be specifically designed for execution of one or more of the operations of method 200.

An operation 202 may include receiving, by a round touchscreen that is included in the control interface of the blender, a first type of user input. The first type of user input may indicate a user touching the round touchscreen in a first manner. In some embodiments, operation 202 is performed by a touchscreen the same as or similar to touchscreen 31 (shown in FIG. 1 and described herein).

An operation 204 may include making detections regarding the user input received by the control interface of the blender. The detections may include a first type of detections. The first type of detections may indicate occurrences of the control interface receiving the first type of user input. In some embodiments, operation 204 is performed by control circuitry the same as or similar to control circuitry 17 (shown in FIG. 1 and described herein).

An operation 206 may include, responsive to a first detection of the first type of detections, effectuating a transition from the ready-to-blend mode to a first blending mode. In some embodiments, operation 206 is performed by control circuitry the same as or similar to control circuitry 17 (shown in FIG. 1 and described herein).

An operation 208 may include, during the ready-to-blend mode, controlling an electrical motor such that the blender is not blending. The electrical motor may be included in the base assembly of the blender. In some embodiments, operation 208 is performed by control circuitry the same as or similar to control circuitry 17 (shown in FIG. 1 and described herein).

An operation 210 may include, during the first blending mode, controlling an electrical motor such that the blender is blending. In some embodiments, operation 210 is performed by control circuitry the same as or similar to control circuitry 17 (shown in FIG. 1 and described herein).

Although the present technology has been described in detail for the purpose of illustration based on what is currently considered to be the most practical and preferred implementations, it is to be understood that such detail is solely for that purpose and that the technology is not limited to the disclosed implementations, but, on the contrary, is intended to cover modifications and equivalent arrangements that are within the spirit and scope of the appended claims. For example, it is to be understood that the present technology contemplates that, to the extent possible, one or more features of any implementation can be combined with one or more features of any other implementation.

## Claims

1. A portable blender (100) configured to blend foodstuffs, the portable blender (100) comprising:
a base assembly (11),
a container assembly (12),
a blending component (133) configured to rotate around a rotational axis (13a) and blend the foodstuffs during blending by the portable blender (100),
a touchscreen (31), and
control circuitry (17),
wherein the base assembly (11) includes an electrical motor (14) configured to drive rotation of the blending component (133), a rechargeable battery (15) configured to power the electrical motor (14), and a charging interface (25) configured to conduct electrical power to the rechargeable battery (15);
wherein the container assembly (12) is configured to hold the foodstuffs within a container body (20) during blending by the portable blender (100), wherein the container assembly (12) includes a proximal end and a distal end opposite the proximal end, wherein the proximal end is open and disposed near the blending component (133), subsequent to the base assembly (11) being coupled to the container assembly (12);
wherein the touchscreen (31) is configured to (a) receive different types of user input from a user, including a first type of user input, and further configured to (b) present information to the user, wherein the first type of user input includes the user touching the touchscreen (31) in a first manner, wherein the first type of user input turns the blending on and off;
wherein the control circuitry (17) is included in the base assembly (11) and configured to:
(*i*) control the electrical motor (14) during the rotation of the blending component (133);
(*ii*) make detections distinguishing the different types of user input received by the touchscreen (31), wherein the detections include a first type of detections, wherein the first type of detections indicates occurrences of the touchscreen (31) receiving the first type of user input from the user; and
*(iii)* responsive to a first detection of the first type of detections, effectuate a transition from a ready-to-blend mode to the first blending mode, wherein:
(*a*) during the ready-to-blend mode, the portable blender (100) is not blending, and
(*b*) during the first blending mode, the portable blender (100) is blending for a default duration.

2. The portable blender (100) of claim 1,
wherein the round touchscreen (31) is integrated into the base assembly (11),
wherein the electrical motor (14) is integrated into the base assembly (11), or
wherein a shape of the base assembly (11) has a base diameter between 2 and 4 inches.

3. The portable blender (100) of claim 1 or 2,
wherein the electrical motor (14) is integrated permanently into the base assembly (11), or
wherein the rechargeable battery (15) is integrated permanently into the base assembly (11) such that the base assembly (11) forms an integral whole.

4. The portable blender (100) of claim any one of the preceding claims,
wherein the charging interface is a standardized charging interface (25), in particular a universal serial bus (USB) port configured to receive an electrical connector for charging the rechargeable battery (15).

5. The portable blender (100) of any one of the preceding claims,
wherein the base assembly (11) has a conical shape, and optionally wherein the touchscreen (31) is curved to match the conical shape of the base assembly (11).

6. The portable blender (100) of any one of the preceding claims,
wherein the touchscreen (31) further includes an electronic ink design, wherein the electronic ink design is visible to the user responsive to the portable blender (100) being either in a low-power mode or the portable blender (100) being turned off.

7. The portable blender (100) of any one of the preceding claims,
wherein the first blending mode is a fixed-time blending mode of operation during which the portable blender (100) blends for the default duration, and
wherein, during the fixed-time blending mode of operation, the control circuitry (17) is configured to prevent the rotation of the blending component (133) after expiration of the default duration.

8. The portable blender (100) of any one of the preceding claims,
wherein the different types of user input include a second type of user input,
wherein the second type of user input indicates the user selecting a settings item included in a settings menu, wherein the touchscreen (31) is further configured to:
(*iii*) present the user with the settings menu, wherein the settings menu includes the settings item, wherein the settings item corresponds to a modification of a default duration of a first blending mode, wherein the first blending mode is a fixed-time blending mode of operation during which the portable blender (100) blends for the default duration;
wherein the control circuitry (17) is further configured to, responsive to a second detection of the second type of detections, effectuate the modification of the default duration of the first blending mode, wherein the modification corresponds with the user selecting the settings item included in the settings menu.

9. The portable blender (100) of claim 8,
wherein the different types of user input include a third type of user input,
wherein the touchscreen (31) is further configured to:
(*iv*) present the user with at least one of a selection menu and a recipe menu, responsive to a detection of the third type of detections.

10. The portable blender (100) of any one of the preceding claims,
wherein the control circuitry (17) is further configured to transition from the first blending mode to a second blending mode, responsive to a second occurrence of the first type of detections,
wherein the second blending mode includes a variable-time blending mode,
wherein during the variable-time blending mode of operation, the control circuitry (17) is configured to effectuate the rotation of the blending component (133) for one or more durations, and
wherein individual ones of the one or more durations correspond to individual occurrences of the user touching the round touchscreen (31).

11. The portable blender (100) of claim 8 or 9,
wherein the control circuitry (17) is further configured to:
make detections regarding the first type of detections, wherein the first type of detections indicates the user tapping the touchscreen (31) once, or
make detections regarding the second type of detections, wherein the second type of detections indicates multiple consecutive occurrences of the user tapping the touchscreen (31), or
make detections regarding the third type of detections, wherein the third type of detections indicates the user swiping the touchscreen (31).

12. The portable blender (100) of any one of claims 1 to 10,
wherein the first manner of the user touching the round touchscreen (31) includes at least one of (*i*) the user tapping and holding the round touchscreen (31), (*ii*) the user double tapping the round touchscreen (31), (*iii*) the user swiping the round touchscreen (31) horizontally from left to right, (*iv*) the user swiping the round touchscreen (31) horizontally from right to left, (v) the user swiping the round touchscreen (31) vertically from top to bottom, and (*vi*) the user swiping the round touchscreen (31) vertically from bottom to top.

13. The portable blender (100) of any one of claims 1 to 10 and 12,
wherein the second manner of the user touching the round touchscreen (31) includes at least one of (*i*) the user tapping and holding the round touchscreen (31), (*ii*) the user double tapping the round touchscreen (31), (*iii*) the user swiping the round touchscreen (31) horizontally from left to right, (*iv*) the user swiping the round touchscreen (31) horizontally from right to left, (v) the user swiping the round touchscreen (31) vertically from top to bottom, and (*vi*) the user swiping the round touchscreen (31) vertically from bottom to top.

14. The portable blender (100) of any one of the preceding claims,
wherein the first manner of the user touching the round touchscreen (31) is different from the second manner of the user touching the round touchscreen (31).

15. A method for transitioning between a ready-to-blend mode and a first blending mode of a portable blender (100), the portable blender (100) being configured to blend foodstuffs, wherein the portable blender (100) includes a base assembly (11), a container assembly (12), a blending component (133), a touchscreen (31), and control circuitry (17), the method comprising:
receiving, by the touchscreen (31), a first type of user input, wherein the first type of user input indicates a user touching the round touchscreen (31) in a first manner;
making detections distinguishing different types of user input received by the touchscreen (31) of the portable blender (100), wherein the detections include a first type of detections, wherein the first type of detections indicates occurrences of the touchscreen (31) receiving the first type of user input from the user;
responsive to a first detection of the first type of detections, effectuating a transition from the ready-to-blend mode to the first blending mode;
during the ready-to-blend mode, controlling an electrical motor (14) included in the base assembly (11) of the portable blender (100) such that the portable blender (100) is not blending; and
during the first blending mode, controlling the electrical motor (14) of the portable blender (100) such that the blending component (133) is rotating and the portable blender (100) is blending.
